# EUROPEAN PATENT APPLICATION

(11) **EP 3 901 883 A1**
(43) Date of publication of application: **27.10.2021**
(21) Application number: 19898523.6
(22) Date of filing: 16.10.2019
(51) Int. Cl.: G06Q 30/02

(54) **COMMODITY ADVERTISEMENT DISPLAY METHOD AND DEVICE, AND COMPUTER-READABLE STORAGE MEDIUM**

(30) Priority: 17.12.2018 CN 201811544355; 26.04.2019 CN 201910345451
(71) Applicant: BOE TECHNOLOGY GROUP CO., LTD., Beijing 100015 (CN)
(72) Inventor: LI, Xin, Beijing 100176 (CN); JIA, Ning, Beijing 100176 (CN); DONG, Wenchu, Beijing 100176 (CN); ZHANG, Honglei, Beijing 100176 (CN)
(74) Representative: Maiwald Patent- und Rechtsanwaltsgesellschaft mbH
(86) International application number: PCT/CN2019/111490
(87) International publication number: WO 2020/125175

(57) **Abstract**

A commodity advertisement display method and device, and a computer-readable storage medium. The commodity advertisement display method comprises: acquiring object attribute information of one or more display objects of a display terminal for viewing commodity advertisements, wherein the object attribute information at least comprises gender information of each display object and quantity information corresponding to the display objects for each gender; determining a first display object according to the acquired object attribute information, and selecting, according to the first display object, a first advertisement from among first-type commodity advertisements for display; and during the process of displaying the first advertisement, acquiring distance information between at least one display object and a pre-set target, and determining, according to the distance information, whether to select a second advertisement from among second-type commodity advertisements for display, wherein the first advertisement and the second advertisement are advertisements for the same commodity.

## Description

### CROSS REFERENCE TO RELATED APPLICATIONS

The present application claims priorities to Chinese Patent Application No. 201811544355.1, filed on December 17, 2018, and Chinese Patent Application No. 201910345451.1, filed on April 26, 2019, the disclosure of which are incorporated herein by reference in their entireties as part of the present application.

### TECHNICAL FIELD

Embodiments of the present disclosure relate to a method and a device for displaying a commodity advertisement, and a computer-readable storage medium.

### BACKGROUND

With the rapid development of social economy and science and technology, and the implementation of new retail, smart city, smart transportation and other projects, the demand for display devices such as digital signage and corresponding display methods in various industries, especially commercial retail and transportation industries, has gradually increased. Major online and offline companies no longer focus on B to C, but also start to work on B to B.

It can be seen that the competition among enterprises is fierce nowadays. In offline scenarios, there is still a lack of accurate information classification and information delivery for specific display objects.

### SUMMARY

An aspect of the present disclosure provides a display method, which includes: obtaining object attribute information of a display object; determining display content to be displayed according to the obtained object attribute information; and performing a display operation to the display object according to the determined display content.

According to an embodiment of the present disclosure, the obtaining the object attribute information of the display object comprises: obtaining group attribute information of the display object.

According to an embodiment of the present disclosure, the obtaining the group attribute information of the display object further comprises: obtaining group quantity information corresponding to group attribute information of each group of the display object, respectively; and determining, according to each group attribute information and corresponding group quantity information, group attribute information of the display object.

According to an embodiment of the present disclosure, the group attribute information comprises at least first attribute information and second attribute information; and the determining the display content to be displayed according to the obtained object attribute information comprises: determining, according to the first attribute information, first display content to be displayed; and determining, according to the second attribute information, determine second display content to be displayed.

According to an embodiment of the present disclosure, the obtaining the object attribute information of the display object comprises: obtaining group attention degree information of the display object; and the determining the display content to be displayed according to the obtained object attribute information further comprises: determining, according to the obtained group attention degree information, the display content to be displayed.

According to an embodiment of the present disclosure, the method further comprises: obtaining update information of the display object associated with current display content; and updating the display content according to the update information.

According to another aspect of the present disclosure, there is also provided a display device, which includes: an obtaining unit configured to obtain object attribute information of a display object; a determining unit configured to determine display content to be displayed according to the obtained object attribute information; and a display unit configured to perform a display operation to the display object according to the determined display content.

According to yet another aspect of the present disclosure, there is also provided a display device, which includes: one or more processors; one or more memories, wherein the one or more memories store computer-readable codes which, when executed by the one or more processors, perform following steps: obtaining object attribute information of a display object; determining display content to be displayed according to the obtained object attribute information; and performing a display operation to the display object according to the determined display content.

According to yet another aspect of the present disclosure, there is also provided a computer-readable storage medium storing computer instructions, wherein the computer instructions, when executed by a processor, cause the processor to perform following steps: obtaining object attribute information of a display object; determining display content to be displayed according to the obtained object attribute information; and performing a display operation to the display object according to the determined display content.

According to still another aspect of the present disclosure, there is also provided an information obtaining method, which includes: obtaining object attribute information of a display object, wherein the object attribute information comprises group attribute information and/or group attention degree information of the display object; and transmitting the obtained object attribute information of the display object.

According to an embodiment of the present disclosure, in a case where the object attribute information comprises the group attribute information, the obtaining the object attribute information of the display object comprises: obtaining group quantity information corresponding to group attribute information of each group of the display object, respectively; and determining, according to each group attribute information and corresponding group quantity information, group attribute information of the display object.

According to yet another aspect of the present disclosure, there is also provided an information obtaining device, which includes: an obtaining unit configured to obtain object attribute information of a display object, wherein the object attribute information comprises group attribute information and/or group attention degree information of the display object; a transmitting unit configured to transmit the obtained object attribute information of the display object.

According to yet another aspect of the present disclosure, there is also provided an information obtaining device, which includes: one or more processors; one or more memories, wherein the one or more memories store computer-readable codes that, when executed by the one or more processors, perform following steps: obtaining object attribute information of a display object, wherein the object attribute information comprises group attribute information and/or group attention degree information of the display object; and transmitting the obtained object attribute information of the display object.

According to yet another aspect of the present disclosure, there is also provided a method for displaying a commodity advertisement, which incldues: obtaining object attribute information of one or more display objects of a display terminal who view a commodity advertisement, the object attribute information comprising at least gender information of each display object and display object quantity information corresponding to each gender; determining a first display object according to the obtained object attribute information, and selecting, according to the first display object, a first advertisement from a first category of commodity advertisements for display; and obtaining distance information between at least one display object and a preset target during displaying the first advertisement, and determining, according to the distance information, whether to select a second advertisement from a second category of commodity advertisements for display, wherein the first advertisement and the second advertisement are advertisements of a same commodity.

According to an embodiment of the present disclosure, the second advertisement provides other information about the same commodity in addition to content information contained in the first advertisement.

According to an embodiment of the present disclosure, the determining, according to the distance information, whether to select the second advertisement from the second category of commodity advertisements for display comprises: selecting the second advertisement from the second category of commodity advertisements for display, in response to the distance information meeting a preset distance threshold requirement; and selecting, from the second category of commodity advertisements, another advertisement different from the second advertisement for display, in response to the distance information not meeting the preset distance threshold requirement.

According to an embodiment of the present disclosure, the determining, according to the distance information, whether to select the second advertisement from the second category of commodity advertisements for display comprises: selecting the second advertisement from the second category of commodity advertisements for display, in response to the distance information meeting a preset distance threshold requirement; and reobtaining object attribute information of one or more display objects of the display terminal who view the commodity advertisement, in response to the distance information not meeting the preset distance threshold requirement.

According to an embodiment of the present disclosure, in a case where it is determined to select the second advertisement from the second category of commodity advertisements for display, the method further comprises: determining whether there is a touch operation on a display interface of the display terminal of the commodity advertisement during displaying the second advertisement, and selecting a third advertisement from a third category of commodity advertisements for display, in response to the touch operation existing, wherein the first advertisement, the second advertisement, and the third advertisement are advertisements of the same commodity.

According to an embodiment of the present disclosure, the third advertisement comprises at least one selected from a group consisting of position information of the commodity, evaluation information of the commodity, and a purchase link of the commodity.

According to an embodiment of the present disclosure, the method further comprises: selecting, from the second category of commodity advertisements, another advertisement different from the second advertisement for display, in response to the touch operation not existing.

According to an embodiment of the present disclosure, the gender information comprises male and female, and the determining the first display object according to the obtained object attribute information comprises:
determining males as the first display object, in a case where a number of the display objects whose gender information is male is greater than a number of display objects whose gender information is female;
determining females as the first display object, in a case where a number of display objects whose gender information is male is less than a number of display objects whose gender information is female; and
determining males or females as the first display object, in a case where a number of display objects whose gender information is male is equal to a number of display objects whose gender information is female.

According to an embodiment of the present disclosure, the selecting, according to the first display object, the first advertisement from the first category of commodity advertisements for display comprises: ranking a plurality of different first advertisements, and sequentially displaying the plurality of different first advertisements.

According to an embodiment of the present disclosure, the preset distance threshold requirement is that a distance between the at least one display object and the preset target is less than a preset distance threshold.

According to an embodiment of the present disclosure, the first advertisement is a static advertisement; and the second advertisement is a dynamic advertisement.

According to yet another aspect of the present disclosure, there is also provided a commodity advertisement display device, which includes: an obtaining unit configured to obtain object attribute information of one or more display objects of a display terminal who view a commodity advertisement, the object attribute information comprising at least gender information of each display object and display object quantity information corresponding to each gender; a display unit configured to determine a first display object according to the obtained object attribute information, and select, according to the first display object, a first advertisement from a first category of commodity advertisements for display; and a determining unit configured to obtain distance information between at least one display object and a preset target during displaying the first advertisement, and determine, according to the distance information, whether to select a second advertisement from a second category of commodity advertisements for display, wherein the first advertisement and the second advertisement are advertisements of a same commodity, and the second advertisement contains more content information than the first advertisement.

According to yet another aspect of the present disclosure, there is also provided a commodity advertisement display device, which includes: one or more processors; and one or more memories, wherein the one or more memories store computer readable codes which, when executed by the one or more processors, perform following steps: obtaining object attribute information of one or more display objects of a display terminal who view a commodity advertisement, the object attribute information comprising at least gender information of each display object and display object quantity information corresponding to each gender; determining a first display object according to the obtained object attribute information, and selecting, according to the first display object, a first advertisement from a first category of commodity advertisements for display; and obtaining distance information between at least one display object and a preset target during displaying the first advertisement, and determining, according to the distance information, whether to select a second advertisement from a second category of commodity advertisements for display, wherein the first advertisement and the second advertisement are advertisements of a same commodity.

According to yet another aspect of the present disclosure, there is also provided a computer-readable storage medium storing computer instructions, wherein the computer instructions, when executed by a processor, cause the processor to perform following steps: obtaining object attribute information of one or more display objects of a display terminal who view a commodity advertisement, the object attribute information comprises at least gender information of each display object and display object quantity information corresponding to each gender; determining a first display object according to the obtained object attribute information, and selecting, according to the first display object, a first advertisement from a first category of commodity advertisements for display; and obtaining distance information between at least one display object and a preset target during displaying the first advertisement, and determining, according to the distance information, whether to select a second advertisement from a second category of commodity advertisements for display, wherein the first advertisement and the second advertisement are advertisements of a same commodity.

### BRIEF DESCRIPTION OF THE DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.
FIG. 1 illustrates a flow chart of a display method according to at least one embodiment of the present disclosure;
FIG. 2 illustrates an exemplary implementation of obtaining group attribute information of the display object according to at least one embodiment of the present disclosure;
FIG. 3 illustrates a further exemplary implementation of the display method according to at least one embodiment of the present disclosure;
FIG. 4 illustrates a schematic diagram of a specific example of a display method according to at least one embodiment of the present disclosure;
FIG. 5 illustrates a structural block diagram of a display device according to at least one embodiment of the present disclosure;
FIG. 6 illustrates a structural block diagram of a display device according to at least one embodiment of the present disclosure;
FIG. 7 illustrates a flow chart of an information obtaining method according to at least one embodiment of the present disclosure;
FIG. 8 illustrates an exemplary implementation of obtaining group attribute information of the display object according to at least one embodiment of the present disclosure;
FIG. 9 illustrates a further exemplary implementation of an information obtaining method according to at least one embodiment of the present disclosure;
FIG. 10 illustrates a structural block diagram of an information obtaining device according to at least one embodiment of the present disclosure;
FIG. 11 illustrates a structural block diagram of an information obtaining device according to at least one embodiment of the present disclosure;
FIG. 12 illustrates a flow chart of a method for displaying commodity advertisement according to at least one embodiment of the present disclosure;
FIG. 13 illustrates a structural block diagram of a commodity advertisement display device according to at least one embodiment of the present disclosure;
FIG. 14A illustrates a structural block diagram of a commodity advertisement display device according to at least one embodiment of the present disclosure;
FIG. 14B illustrates a structural block diagram of a commodity advertisement display device according to at least one embodiment of the present disclosure;
FIG. 15 illustrates a perspective diagram of a display device according to at least one embodiment of the present disclosure; and
FIG. 16 illustrates a perspective line diagram of a display device according to at least one embodiment of the present disclosure.

### DETAILED DESCRIPTION

In order to make objects, technical details and advantages of the embodiments of the invention apparent, the technical solutions of the embodiments will be described in a clearly and fully understandable way in connection with the drawings related to the embodiments of the invention. Apparently, the described embodiments are just a part but not all of the embodiments of the invention. Based on the described embodiments herein, those skilled in the art can obtain other embodiment(s), without any inventive work, which should be within the scope of the invention.

Unless otherwise defined, all the technical and scientific terms used herein have the same meanings as commonly understood by one of ordinary skill in the art to which the present disclosure belongs. The terms "first," "second," etc., which are used in the description and the claims of the present application for invention, are not intended to indicate any sequence, amount or importance, but distinguish various components. Also, the terms such as "a," "an," etc., are not intended to limit the amount, but indicate the existence of at least one. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

Flow charts are used in the present disclosure to illustrate steps of the methods according to embodiments of the present disclosure. It should be understood that the preceding or following steps are not necessarily performed strictly in order. Instead, various steps can be performed in a reverse order or simultaneously. In addition, other steps can be added to or removed from these processes.

In the current display field, display devices such as digital signages generally perform display operations according to preset display content and time configuration without considering the specific object attribute information of the real-time audience who is the display object, resulting in the lack of pertinence and tendentiousness of the display content and thus affecting the display effect.

Therefore, a display method capable of accurately classifying and delivering information for a specific display object is required to improve the pertinence of display content and enhance the display effect.

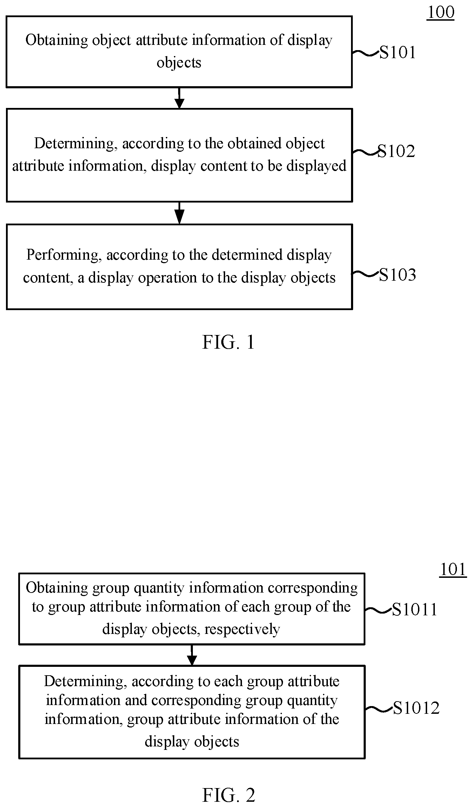

Hereinafter, a display method 100 according to at least one embodiment of the present disclosure will be described with reference to FIG. 1. FIG. 1 is a flow chart illustrating the display method of the present disclosure.

First, object attribute information of display objects is obtained according to step S101.

According to at least one embodiment of the present disclosure, the object attribute information of the display objects obtained in this step may include group attribute information of the display objects. Optionally, the group attribute information of the display objects may be, for example, one or more of gender information, age information, occupation information, etc. of the display objects. For example, according to at least one embodiment of the present disclosure, the display objects can be classified by using the image information of the display objects obtained by, for example, an AI camera, a smart camera, etc., thereby indicating that the display object is male or female, or that the display object is an elderly man or a child, or that the display object is a policeman or a doctor, etc. In the process of classifying, various information collection and classification methods, such as facial recognition (for example, to distinguish male and female, elderly men and children), size measurement (such as height measurement to distinguish elderly men and children), image recognition (for example, to distinguish policemen and doctors through uniforms), etc. can be adopted, which is not limited herein.

FIG. 2 illustrates an exemplary implementation of obtaining group attribute information of the display objects according to at least one embodiment of the present disclosure. As illustrated in FIG. 2, in step S1011, group quantity information corresponding to group attribute information of each group of the display objects is obtained, respectively. Optionally, the corresponding group quantity information may be obtained in correspondence to the group attribute information of the foregoing various categories, for example, information that there are 3 males and 7 females may be obtained.

In step S1012, group attribute information of the display objects is determined, according to each group attribute information and corresponding group quantity information. Optionally, group attribute information existing in the display objects can be compared in combination with corresponding group quantity information, and in the case where certain group attribute information corresponds to the largest group quantity information, this group attribute information is determined as the group attribute information of the display objects. For example, in the case where the obtained information is that there are 3 males and 7 females, it can be determined that the group attribute information of the display objects is female; in the case where the obtained information is that there are 7 males and 3 females, it can be determined that the group attribute information of the display objects is male. In addition, in the case where the obtained information is that there are 5 males and 5 females, it can be determined that the group attribute information of the display objects is neutral (in subsequent steps, the content for males or females can be randomly displayed).

According to another embodiment of the present disclosure, the object attribute information of the display objects obtained in this step may further include group attention degree information of the display objects. The group attention degree of the display objects indicates how much attention is paid to display content by the display objects or a specific group in the display objects when the current display content is being played. The group attention degree may be determined by a distance between the display objects and the display content, or may be determined by, for example, postures and motions of the display objects. Optionally, according to at least one embodiment of the present disclosure, image information of the display objects obtained by, for example, an AI camera, a smart camera, etc. may be used to collect and determine the group attention degree information of the display objects. In the process of determining, various information collection methods, such as facial recognition or eyeball tracking, image recognition, distance collection, etc. along with preset thresholds can be adopted to determine how much attention is paid to the display content by the display objects or a specific group in the display objects, which is not limited herein. For example, it can be determined that the group attention degree information is focusing in response to an eye-gazing duration of the display objects or a specific group of the display objects for the display content exceeding a certain threshold. Alternatively, it can be determined that the group attention degree information is focusing in response to a distance between the display objects or a specific group of the display objects and the display content being reduced from 3 meters to 0.8 meters; and it can be determined that the group attention degree information of the display objects is not-focusing in response to the distance between the display objects or a specific group of the display objects and the display content being increased from 1 meter to 4 meters.

The object attribute information of the display objects listed above, such as the group attribute information and the group attention degree information, is only specific examples of the object attribute information. In practice, any object attribute information associated with the display objects can be adopted, which is not limited herein.

Referring back to FIG. 1, in step S102, display content to be displayed is determined, according to the obtained object attribute information.

In at least one embodiment of the present disclosure, in the case where the object attribute information of the display objects is group attribute information including at least first attribute information and second attribute information, first display content may be determined according to the first attribute information; and second display content may be determined according to the second attribute information. For example, in the case where the group attribute information includes the first attribute information (male) and the second attribute information (female), the first display content for male can be selected according to the first attribute information male, and the second display content for female can be selected according to the second attribute information female. In addition, in the case where the group attribute information further includes the aforementioned information of neutral, the display content may be randomly selected from the first display content and the second display content.

Optionally, when the first display content is displayed, a plurality of different first display content may be ranked according to one or more preset features, so that the plurality of first display contents are sequentially displayed according to the ranking result within a preset time period. Similarly, when the second display content is displayed, a plurality of different second display contents may also be ranked according to one or more preset features, so that the plurality of second display content are sequentially displayed according to the ranking result within a preset time period. For example, when displaying the first display content for male, the plurality of first display content may be ranked and sequentially displayed according to one or more features of discount, price, sales volume, and sales volume ranking corresponding to the plurality of first display content, respectively.

In at least one embodiment of the present disclosure, in the case where the object attribute information of the display objects is the group attention degree information, the display content to be displayed may be determined according to the group attention degree information. Optionally, in the case where the group attention degree information is focusing, extended display may be performed or otherwise further information may be provided for the current display content. For example, for the static display content that is currently being displayed, dynamic multimedia information such as audio and video can be provided, or a touch panel or a touch menu for touch control can be provided for the display objects to select and obtain related information. In the case where the group attention degree information is not-focusing, the current display content can be replaced and changed. For example, the current display content can be changed in time according to the group attribute information of the display objects, in order to provide the content or picture of interest to the display objects as much as possible.

The above method for determining the display content to be displayed according to the object attribute information of the display objects is only an example, and in practice, there is no limitation on the specific implementation and content.

Subsequently, in step S103, a display operation is performed to the display objects, according to the determined display content.

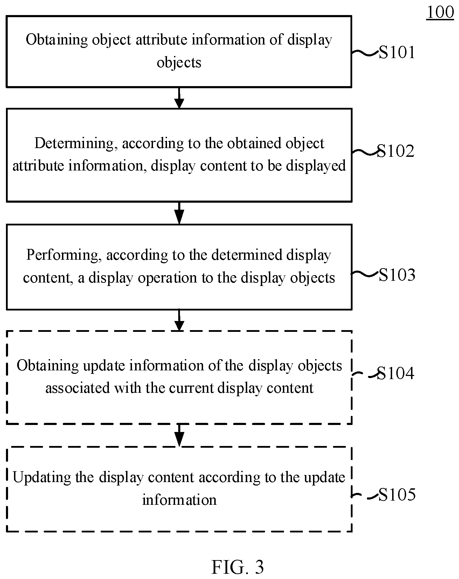

FIG. 3 illustrates a further exemplary implementation of the display method according to at least one embodiment of the present disclosure. As illustrated in FIG. 3, the display method of at least one embodiment of the present disclosure may further include: step S104: obtaining update information of the display objects associated with the current display content. Optionally, in the previous step, the display content may be determined according to the object attribute information of the display objects. Therefore, in step S104, update information can be obtained for the display objects associated with the display content at this point. For example, in the case where the targeted display object of the current display content is males, in this step, the corresponding update information can be obtained for the male. In an example, the update information may be detailed group attribute information, such as one or more of age information, occupation information, etc. of a male display object. In another example, the update information may also be the aforementioned group attention degree information, for example, it can be determined that the group attention degree information is focusing in response to an eye-gazing duration of the male for the display content exceeding a certain threshold. Alternatively, it can be determined that the group attention degree information is not-focusing in response to a distance between the male and the display content being increased from 1 meter to 4 meters.

In step S105, updating the display content according to the update information. In this step, the display content can be updated correspondingly according to the specific type of the aforementioned update information. The specific update method is similar to the method for determining the display content according to the object attribute information in step S102, and details are not described herein again.

In the above display method of the present disclosure, the corresponding display content can be determined according to different object attribute information of the display objects to achieve specific analysis of the display object and accurate delivery of the display content, thereby improving the pertinence of the display content and enhancing the display effect.

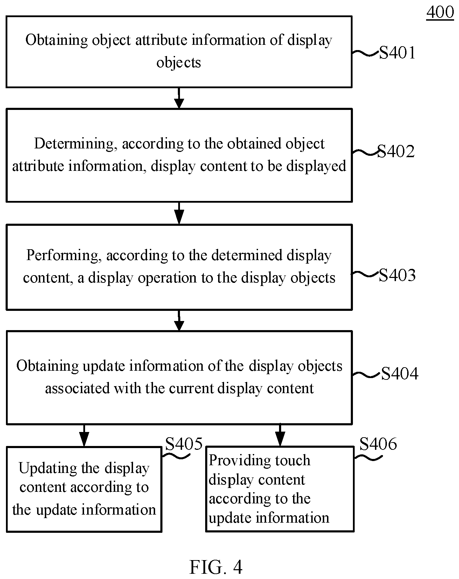

FIG. 4 is a schematic diagram illustrating a specific example of a display method 400 according to at least one embodiment of the present disclosure.

As illustrated in FIG. 4, in step S401, object attribute information of display objects is obtained.

In this embodiment, the obtained object attribute information of the display objects is gender information of the display object, such as male or female. Specifically, in this step, it can be obtained that there are 3 males and 7 females in the display object through facial recognition by the AI camera, therefore the group attribute information of the display object can be determined to be female according to the group attribute information and the corresponding group quantity information.

In step S402, the display content to be displayed is determined according to the obtained object attribute information of the display objects.

In this embodiment, it is determined, in response to the object attribute information of the display objects being female, to display the second display content corresponding to the female. In this case, it may be determined as the second static display content.

In step S403, a display operation is performed to the display objects according to the determined display content.

In this step, the determined second static display content is displayed. When displaying the second static display content, and before the subsequent step S404, the plurality of second static display contents may be ranked according to one or more features of discount, price, sales volume, and sales volume ranking corresponding to the plurality of second display contents, and the plurality of second static display contents may be displayed according to the ranking result.

In step S404, update information of the display objects associated with the current display content is obtained.

In this step, the obtained update information of the display objects (i.e., females) associated with the current display content (i.e., the second static display content) is corresponding group attention degree information, i.e., group attention degree information of females when displaying the second static display content.

In step S405, the display content is updated according to the update information.

In this step, in the case where it is determined that the group attention degree information of the female is focusing, the second static display content may be switched to the second dynamic display content to present richer display information about the second display content to related display objects (i.e., females) in order to further improve the display effect. When it is determined that the group attention degree information of females is not-focusing, the second static display content may be changed, for example, it is possible to detect the object attribute information of the current display objects or its change trend in real time, to switch the second static display content to other content, such as the first static display content for male.

In addition, at least one embodiment of the present disclosure may further include step S406: providing touch display content according to the update information.

This step S406 may be performed after step S404 or after step S405. In other words, step S406 may be parallel to step S405, or step S405 may be followed by step S406. In FIG. 4, the case where step S406 is parallel to step S405 is taken as an example, which is not limited in practice.

In this step, a corresponding touch panel or touch menu may be provided for the display objects to obtain more detailed information related to the aforementioned display content, or to perform further touch operations or selection (for example, one or more of specific parameter information, price, sales area, and promotional information of the current display content can be displayed on the touch panel, or a purchase link can be provided to the display objects for touch selection, etc.).

In the above display method of the present disclosure, the corresponding display content can be determined according to different object attribute information of the display objects to achieve specific analysis of the display object and accurate delivery of the display content, thereby improving the pertinence of the display content and enhancing the display effect.

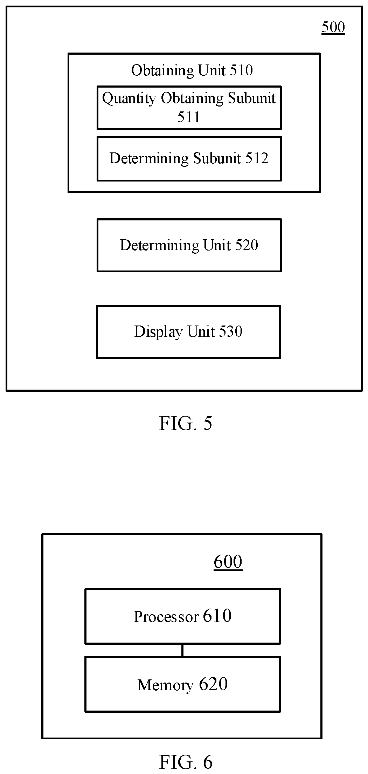

Next, a display device 500 according to at least one embodiment of the present disclosure will be described with reference to FIG. 5.

As illustrated in FIG. 5, the display device 500 according to at least one embodiment of the present disclosure includes an obtaining unit 510, a determining unit 520, and a display unit 530.

The obtaining unit 510 obtains object attribute information of display objects.

According to at least one embodiment of the present disclosure, the object attribute information of the display objects obtained by the obtaining unit 510 may include group attribute information of the display objects. Optionally, the group attribute information of the display objects may be, for example, one or more of gender information, age information, occupation information, etc. of the display objects. For example, according to at least one embodiment of the present disclosure, the display objects can be classified by using the image information of the display object obtained by the obtaining unit 510 such as an AI camera, a smart camera, etc., thereby indicating that the display object is male or female, or that the display object is an elderly man or a child, or that the display object is a policeman or a doctor, etc. In the process of classifying, various information collection and classification methods, such as facial recognition (for example, to distinguish male and female, elderly man and children), size measurement (such as height measurement to distinguish elderly men and children), image recognition (for example, to distinguish policemen and doctors through uniforms), etc. can be adopted, which is not limited herein.

The obtaining unit 510 may include a quantity obtaining subunit 511 and a determining subunit 512. The quantity obtaining subunit 511 obtains group quantity information corresponding to the group attribute information of each group of the display objects, respectively. Optionally, the corresponding group quantity information may be obtained in correspondence to the group attribute information of the foregoing various categories, for example, information that there are 3 males and 7 females may be obtained.

The determining subunit 512 determines the group attribute information of the display objects according to each group attribute information and corresponding group quantity information. Optionally, each group attribute information existing in the display object can be compared in combination with corresponding group quantity information, and in the case where a certain group attribute information corresponds to the largest group quantity information, this group attribute information is determined as the group attribute information of the display objects. For example, in the case where the obtained information is that there are 3 males and 7 females, it can be determined that the group attribute information of the display objects is female; in the case where the obtained information is that there are 7 males and 3 females, it can be determined that the group attribute information of the display objects is male. In addition, in the case where the obtained information is that there are 5 males and 5 females, it can be determined that the group attribute information of the display objects is neutral (in subsequent steps, the content for males or females can be randomly displayed).

According to another embodiment of the present disclosure, the object attribute information of the display object obtained by the obtaining unit 510 may further include group attention degree information of the display objects. The group attention degree of the display objects indicates how much attention is paid to display content by the display objects or a specific group in the display objects when the current display content is being played. The group attention may be determined by a distance between the display objects and the display content, or may be determined by, for example, postures and motions of the display objects. Optionally, according to at least one embodiment of the present disclosure, image information of the display object obtained by, for example, an AI camera, a smart camera, etc. may be used to collect and determine the group attention degree information of the display objects. In the process of determining, various information collection methods, such as facial recognition or eyeball tracking, image recognition, distance collection, etc. along with preset thresholds can be adopted to determine how much attention is paid to the display content by the display objects or a specific group in the display objects, which is not limited herein. For example, it can be determined that the group attention degree information is focusing in response to an eye-gazing duration of the display objects or a specific group of the display objects for the display content exceeding a certain threshold. Alternatively, it can be determined that the group attention degree information is focusing in response to a distance between the display objects or a specific group of the display objects and the display content being reduced from 3 meters to 0.8 meters; and it can be determined that the group attention degree information of the display objects is not-focusing in response to the distance between the display objects or a specific group of the display objects and the display content being increased from 1 meter to 4 meters.

The object attribute information of the display objects listed above, such as the group attribute information and the group attention degree information, are only specific examples of the object attribute information. In practice, any object attribute information associated with the display objects can be adopted, which is not limited herein.

The determining unit 520 determines the display content to be displayed according to the obtained object attribute information about the display object.

In at least one embodiment of the present disclosure, in the case where the object attribute information of the display object is group attribute information including at least first attribute information and second attribute information, the determining unit 520 may determine first display content according to the first attribute information, and may determine second display content according to the second attribute information. For example, in the case where the group attribute information includes the first attribute information (male) and the second attribute information (female), the first display content for male can be selected according to male, and the second display content for female can be selected according to the female. In addition, in the case where the group attribute information further includes the aforementioned information of neutral, the display content may be randomly selected from the first display content and the second display content.

Optionally, when the determining unit 520 determines to display the first display content, a plurality of different first display content may be ranked according to one or more preset features, so that the display unit 530 sequentially displays the plurality of first display content according to the ranking within a preset time period. Similarly, when the determining unit 520 determines to display the second display content, a plurality of different second display content may also be ranked according to one or more preset features, so that the plurality of second display content are sequentially displayed according to the ranking result within a preset time period. For example, when the determining unit 520 determines to display the first display content for male, the plurality of first display content may be ranked according to one or more features of discount, price, sales volume, and sales volume ranking corresponding to the plurality of first display content, respectively, and the display unit 530 may sequentially displays the plurality of first display content according to the ranking result.

In at least one embodiment of the present disclosure, in the case where the object attribute information of the display objects is group attention degree information, the determining unit 520 may determine the display content to be displayed according to the group attention degree information. Optionally, in the case where the group attention degree information is focusing, extended display may be performed or otherwise further information may be provided for the current display content. For example, for the static display content that is currently being displayed, dynamic multimedia information such as audio and video can be provided, or a touch panel or a touch menu for touch control can be provided for the display objects to select and obtain related information. In the case where the group attention degree information is not-focusing, the current display content can be replaced and changed. For example, the current display content can be changed in time according to the group attribute information of the display objects, in order to provide the content or picture of interest to the display object as much as possible.

The above methods for determining the display content to be displayed according to the object attribute information of the display objects are only exemplary, and in practice, there is no limitation on the specific implementation and content.

Subsequently, the display unit 530 performs a display operation to the display object according to the determined display content.

In at least one embodiment of the present disclosure, the display device 500 may further include an update information obtaining unit 540 and an updating unit 550. The update information obtaining unit 540 obtains update information of the display objects associated with the current display content. Optionally, in the previous step, the display content may be determined according to the object attribute information of the display objects. Thus, the update information obtaining unit 540 can obtain update information for the display objects associated with the display content at this point. For example, in the case where the targeted display objects of the current display content are males, and the update information obtaining unit 540 may obtain corresponding update information for the male. In an example, the update information may be detailed group attribute information, such as one or more of age information, occupation information, etc. of a male display object. In another example, the update information may also be the aforementioned group attention degree information, for example, it can be determined that the group attention degree information is focusing in response to an eye-gazing duration of the male for the display content exceeding a certain threshold. Alternatively, it can be determined that the group attention degree information is not-focusing in response to a distance between the male and the display content being increased from 1 meter to 4 meters.

The updating unit 550 updates the display content according to the update information. The updating unit 550 may update the display content correspondingly according to the specific type of the aforementioned update information. The specific update method is similar to the method by which the determining unit 520 determines the display content according to the object attribute information, and details are not described herein again.

In the above-mentioned display device of the present disclosure, the corresponding display content can be determined according to different object attribute information of the display objects to achieve specific analysis of the display object and accurate delivery of the display content, thereby improving the pertinence of the display content and enhancing the display effect.

At least one embodiment of the present disclosure further provides a display device 600, a structural block diagram of which, as illustrated in FIG. 6, includes a processor 610 and a memory 620. It should be understood that the structure of the display device 600 illustrated in FIG. 6 is only exemplary and not limiting, and the display device 600 may have other components according to actual needs.

In at least one embodiment of the present disclosure, the processor 610 and the memory 620 may directly or indirectly communicate with each other. The processor 610, the memory 620, and other components can communicate through a network connection. The network may include a wireless network, a wired network, and/or any combination of wireless and wired networks. The network may include a local area network, an Internet, a telecommunication network, an Internet of things (IoT) based on the Internet and/or the telecommunication network, and/or any combination of the above networks, and the like. The wired network can use, for example, twisted pair, coaxial cable, or optical fiber transmission for communication. The wireless network can use, for example, 3G / 4G / 5G mobile communication network, Bluetooth, Zigbee, or WiFi for communication. The embodiments of the present disclosure do not limit the types and functions of the network.

The processor 610 may control other components of the display device 600 to perform desired functions. The processor 610 may be a central processing unit (CPU), a tensor processor (TPU), or a graphics processing unit (GPU) or other devices having data processing capabilities and / or program execution capabilities. The central processing unit (CPU) can adopt an X86 or ARM architecture. The GPU can be integrated directly on the motherboard separately or built into the Northbridge chip of the motherboard. The GPU can also be built into the central processing unit (CPU).

The memory 620 may include any combination of one or more computer program products, which may include various forms of computer-readable storage mediums, such as volatile memory and/or non-volatile memory. Volatile memory can include, for example, random access memory (RAM) and/or cache memory, and the like. Non-volatile memory may include, for example, read only memory (ROM), hard disk, erasable programmable read only memory (EPROM), portable compact disk read only memory (CD-ROM), USB memory, flash memory, and the like.

The memory 620 may store one or more computer-readable codes or instructions, and the processor 610 can execute the computer instructions to perform the above-described display method including: obtaining object attribute information of display objects; determining, according to the obtained object attribute information, display content to be displayed; performing, according to the determined display content, a display operation to the display objects. For a detailed description of the method, reference may be made to the relevant description of the method in this specification, and details are not repeated here. Various application programs and various data can also be stored in the computer-readable storage medium.

According to another aspect of the present disclosure, there is also provided a computer-readable storage medium storing computer instructions that, when executed by a processor, cause the processor to perform following steps: obtaining object attribute information of display objects; determining, according to the obtained object attribute information of the display objects, corresponding display content; and performing a display operation according to the determined display content.

A computer-readable medium may take many forms, including tangible storage medium, carrier wave medium, or physical transmission medium, etc. The stable storage medium may include optical disk or magnetic disk, and storage systems used in other computers or similar devices that can implement the system components described in the figures. The unstable storage medium may include dynamic memory, such as main memory of the computer platform, etc. The tangible transmission medium may include coaxial cables, copper cables, and optical fibers, such as the lines that form a bus within a computer system. The carrier wave transmission medium can transmit electrical signals, electromagnetic signals, acoustic signals, or optical signals. These signals can be generated by means of radio frequency or infrared data communication. Conventional computer-readable medium include hard disks, floppy disks, magnetic tapes, and any other magnetic medium; CD-ROM, DVD, DVD-ROM, any other optical medium; punched cards, any other physical storage medium containing small hole patterns; RAM, PROM, EPROM, FLASH-EPROM, any other memory chip or tape; carriers and cables for transmitting data or instructions or connecting devices for transmitting carriers, any other program code and/or data that can be read by a computer. Among these forms of the computer-readable mediums, there are many forms that appear in the process of the processor executing instructions and delivering one or more results.

According to still another aspect of the present disclosure, there is also provided a computer, which may include the display device as described above. Specifically, the computer may be implemented as one or more dedicated or general-purpose computer system modules or components, such as a personal computer, a laptop, a tablet, a mobile phone, a personal digital assistance (personal digital assistance, PDA), smart glasses, a smart watch, a smart ring, a smart helmet and any smart portable devices.

According to the above-mentioned display device, computer-readable storage medium and computer of the present disclosure, the corresponding display content can be determined according to different object attribute information of the display objects to achieve specific analysis of the display objects and accurate delivery of the display content, thereby improving the pertinence of the display content and enhancing the display effect.

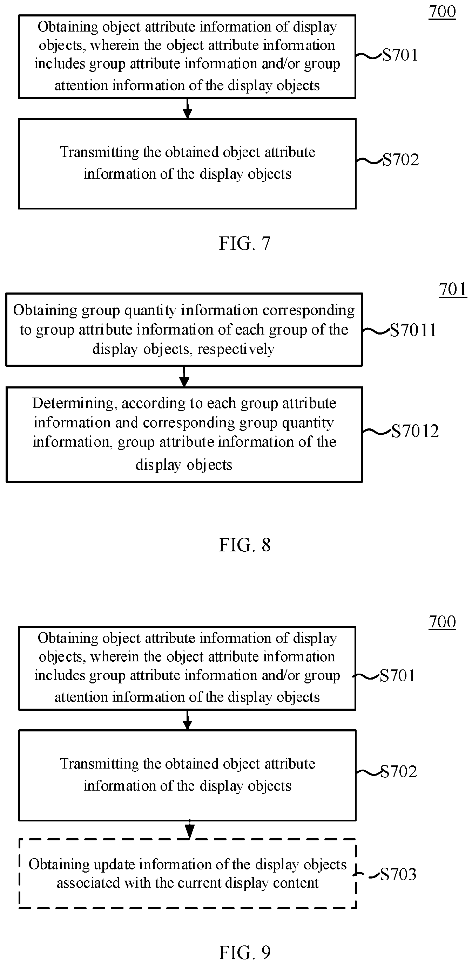

According to at least one embodiment of the present disclosure, an information obtaining method is also provided. Hereinafter, an information obtaining method 700 according to at least one embodiment of the present disclosure will be described with reference to FIG. 7. FIG. 7 is a flow chart of an information obtaining method of the present disclosure.

First, according to step S701, obtaining object attribute information of display objects, wherein the object attribute information includes group attribute information and/or group attention degree information of the display objects.

According to at least one embodiment of the present disclosure, the obtained object attribute information of the display objects may include group attribute information of the display objects. Optionally, the group attribute information of the display objects may be, for example, one or more of gender information, age information, occupation information, etc. of the display objects. For example, according to at least one embodiment of the present disclosure, the display objects can be classified by using the image information of the display object obtained by, for example, an AI camera, a smart camera, etc., thereby indicating that the display object is male or female, or that the display object is an elderly man or a child, or that the display object is a policeman or a doctor, etc. In the process of classifying, various information collection and classification methods, such as facial recognition (for example, to distinguish males and females, distinguish elderly men or children), size measurement (such as height measurement to distinguish elderly men or children), image recognition (for example, to distinguish police men or doctors through uniforms), etc. can be adopted, which is not limited herein.

FIG. 8 illustrates an exemplary implementation of obtaining group attribute information of the display objects according to at least one embodiment of the present disclosure. As illustrated in FIG. 8, in step S7011, group quantity information respectively corresponding to group attribute information of each group of the display objects is obtained. Optionally, the corresponding group quantity information may be obtained in correspondence with the group attribute information of the foregoing various categories, for example, information that there are 3 males and 7 females may be obtained.

In step S7012, group attribute information of the display object is determined, according to each group attribute information and corresponding group quantity information. Optionally, each group attribute information existing in the display objects can be compared in combination with corresponding group quantity information, and in the case where certain group attribute information corresponds to the largest group quantity information, this group attribute information is determined as the group attribute information of the display objects. For example, in the case where the obtained information is that there are 3 males and 7 females , it can be determined that the group attribute information of the display objects is female; in the case where the obtained information is that there are 7 males and 3 females, it can be determined that the group attribute information of the display objects is male. In addition, in the case where the obtained information is that there are 5 males and 5 females, it can be determined that the group attribute information of the display object is neutral (in subsequent steps, the content for males or females can be randomly displayed).

According to another embodiment of the present disclosure, the object attribute information of the display object obtained in this step may further include group attention degree information of the display objects. The group attention degree of the display object indicates how much attention is paid to display content by the display object or a specific group in the display object when the current display content is being displayed. The group attention degree may be determined by a distance between the display objects and the display content, or may be determined by, for example, postures and motions of the display objects. Optionally, according to at least one embodiment of the present disclosure, image information of the display objects obtained by, for example, an AI camera, a smart camera, etc. may be used to collect and determine the group attention degree information of the display objects. In the process of determining, various information collection methods, such as facial recognition or eyeball tracking, image recognition, distance collection, etc. along with preset thresholds can be adopted to determine how much attention is paid to the display content by the display objects or a specific group in the display objects, which is not limited herein. For example, it can be determined that the group attention degree information is focusing in response to an eye-gazing duration of the display objects or a specific group of the display objects for the display content exceeding a certain threshold. Alternatively, it can be determined that the group attention degree information is focusing in response to a distance between the display objects or a specific group of the display objects and the display content being reduced from 3 meters to 0.8 meters; and it can be determined that the group attention degree information of the display object is not-focusing in response to the distance between the display objects or a specific group of the display objects and the display content being increased from 1 meter to 4 meters.

The object attribute information of the display objects listed above, such as the group attribute information and the group attention degree information, is only specific examples of the object attribute information. In practice, any object attribute information associated with the display object can be adopted, which is not limited herein.

Referring to FIG. 7, in step S702, the obtained object attribute information about the display object is transmitted.

FIG. 9 illustrates a further exemplary implementation of the information obtaining method according to at least one embodiment of the present disclosure. As illustrated in FIG. 9, the information obtaining method of at least one embodiment of the present disclosure may further include: step S703, obtaining update information of the display objects associated with the current display content. Optionally, in the previous step, the corresponding update information may be obtained according to the object attribute information of the display object. For example, in the case where the targeted display object of the current display content is males. In this step, the corresponding update information can be obtained for the male. In an example, the update information may be detailed group attribute information, such as one or more of age information, occupation information, etc. of a male display object. In another example, the update information may also be the aforementioned group attention degree information, for example, it can be determined that the group attention degree information is focusing in response to an eye-gazing duration of the male for the display content exceeding a certain threshold. Alternatively, it can be determined that the group attention degree information is not-focusing in response to a distance between the male and the display content being increased from 1 meter to 4 meters. After the update information is obtained, the update information may be transmitted.

According to the above information obtaining method of the present disclosure, different object attribute information can be determined according to the display objects to achieve specific analysis and accurate classification of the display objects, thereby improving the pertinence of the subsequent display content.

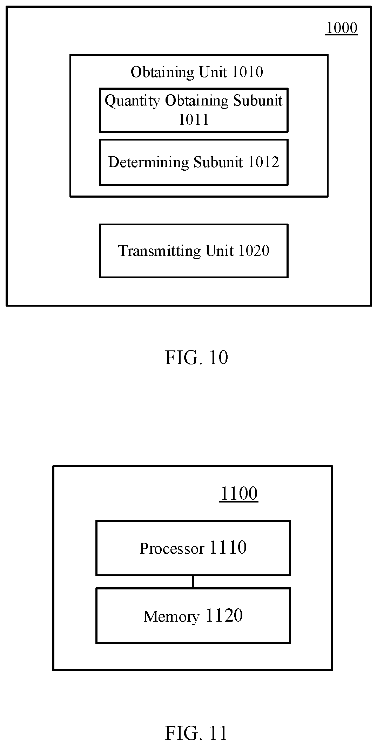

Hereinafter, an information obtaining device 1000 according to at least one embodiment of the present disclosure will be described with reference to FIG. 10, and the information obtaining device may be, for example, an AI camera, a smart camera, or the like.

As illustrated in FIG. 10, the information obtaining device 1000 according to at least one embodiment of the present disclosure includes an obtaining unit 1010 and a transmitting unit 1020.

The obtaining unit 1010 obtains object attribute information of display objects, and the object attribute information includes group attribute information and/or group attention degree information of the display objects.

According to at least one embodiment of the present disclosure, the object attribute information of the display objects obtained by the obtaining unit 1010 may include group attribute information of the display objects. Optionally, the group attribute information of the display objects may be, for example, one or more of gender information, age information, occupation information, etc. of the display objects. For example, according to at least one embodiment of the present disclosure, the display objects can be classified by using the image information of the display objects obtained by, for example, an AI camera, a smart camera, etc., thereby indicating that the display object is male or female, or that the display object is an elderly man or a child, or that the display object is a policeman or a doctor, etc. In the process of classifying, various information collection and classification methods, such as facial recognition (for example, to distinguish males and female, elderly men and children), size measurement (such as height measurement to distinguish elderly men and children), image recognition (for example, to distinguish police men and doctors through uniforms), etc. can be adopted, which is not limited herein.

The obtaining unit 1010 may include a quantity obtaining subunit 1011 and a determining subunit 1012. The quantity obtaining subunit 1011 obtains group quantity information corresponding to the group attribute information of each group of the display objects, respectively. Optionally, the corresponding group quantity information may be obtained for the group attribute information of the foregoing various categories, for example, information that there are 3 males and 7 females may be obtained.

The determining subunit 1012 determines the group attribute information of the display objects according to each group attribute information and corresponding group quantity information. Optionally, each group attribute information existing in the display object can be compared in combination with corresponding group quantity information, and in the case where certain group attribute information corresponds to the largest group quantity information, this group attribute information is determined as the group attribute information of the display objects. For example, in the case where the obtained information is that there are 3 males and 7 females, it can be determined that the group attribute information of the display objects is female; in the case where the obtained information is that there are 7 males and 3 females, it can be determined that the group attribute information of the display objects is male. In addition, in the case where the obtained information is that there are 5 males and 5 females, it can be determined that the group attribute information of the display object is neutral (in subsequent steps, the content for males or females can be randomly displayed).

According to another embodiment of the present disclosure, the object attribute information of the display objects obtained by the obtaining unit 1010 may further include group attention degree information of the display objects. The group attention of the display objects indicates how much attention is paid to display content by the display objects or a specific group in the display objects when the current display content is being played. The group attention degree may be determined by a distance between the display objects and the display content, or may be determined by, for example, postures and motions of the display objects. Optionally, according to at least one embodiment of the present disclosure, image information of the display objects obtained by, for example, an AI camera, a smart camera, etc. may be used to collect and determine the group attention degree information of the display objects. In the process of determining, various information collection methods, such as facial recognition or eyeball tracking, image recognition, distance collection, etc. along with preset thresholds can be adopted to determine how much attention is paid to the display content by the display objects or a specific group in the display objects, which is not limited herein. For example, it can be determined that the group attention degree information is focusing in response to an eye-gazing duration of the display objects or a specific group of the display objects for the display content exceeding a certain threshold. Alternatively, it can be determined that the group attention degree information is focusing in response to a distance between the display objects or a specific group of the display objects and the display content being reduced from 3 meters to 0.8 meters; and it can be determined that the group attention degree information of the display object is not-focusing in response to the distance between the display objects or a specific group of the display objects and the display content being increased from 1 meter to 4 meters.

The object attribute information of the display objects listed above, such as the group attribute information and the group attention degree information, is only specific examples of the object attribute information. In practice, any object attribute information associated with the display object can be adopted, which is not limited herein.

The transmitting unit 1020 transmits the obtained object attribute information of the display objects.

In at least one embodiment of the present disclosure, the information obtaining device 1000 may further include an update information obtaining unit 1030 and an updating unit 1040. The update information obtaining unit 1030 obtains update information of the display objects associated with the current display content. Optionally, the corresponding update information can be obtained according to the object attribute information of the display objects. For example, the targeted display objects of the current display content are males, the update information obtaining unit 1030 may obtain corresponding update information for the male. In an example, the update information may be further group attribute information, such as one or more of age information, occupation information, etc. of male display objects. In another example, the update information may also be the aforementioned group attention degree information, for example, it can be determined that the group attention degree information is focusing in response to an eye-gazing duration of the male for the display content exceeding a certain threshold. Alternatively, it can be determined that the group attention degree information is not-focusing in response to a distance between the male and the display content being increased from 1 meter to 4 meters.

According to the above information obtaining device of the present disclosure, different object attribute information can be determined according to the display objects to achieve specific analysis and accurate classification of the display objects, thereby improving the pertinence of the subsequent display content.

At least one embodiment of the present disclosure also provides an information obtaining device 1100, a structural block diagram of which, as illustrated in FIG. 11, includes a processor 1110 and a memory 1120. It should be understood that the structure of the information obtaining device 1100 illustrated in FIG. 11 is only exemplary and not limiting, and the information obtaining device 1100 may have other components according to actual requirements.

In at least one embodiment of the present disclosure, the processor 1110 and the memory 1120 may directly or indirectly communicate with each other. The processor 1110, the memory 1120, and other components can communicate through a network connection. The network may include a wireless network, a wired network, and/or any combination of wireless and wired networks. The network may include a local area network, an Internet, a telecommunication network, an Internet of things (IoT) based on the Internet and/or the telecommunication network, and/or any combination of the above networks, and the like. The wired network can use, for example, twisted pair, coaxial cable, or optical fiber transmission for communication. The wireless network can use, for example, 3G / 4G / 5G mobile communication network, Bluetooth, Zigbee, or WiFi for communication. The embodiments of the present disclosure do not limit the types and functions of the network.

The processor 1110 may control other components of the information obtaining device 1100 to perform desired functions. The processor 1110 may be a central processing unit (CPU), a tensor processor (TPU), or a graphics processing unit (GPU) or other devices having data processing capabilities and / or program execution capabilities. The central processing unit (CPU) can adopt an X86 or ARM architecture. The GPU can be integrated directly on the motherboard separately or built into the Northbridge chip of the motherboard. The GPU can also be built into the central processing unit (CPU).

The memory 1120 may include any combination of one or more computer program products, which may include various forms of computer-readable storage mediums, such as volatile memory and/or non-volatile memory. Volatile memory can include, for example, random access memory (RAM) and / or cache memory, and the like. Non-volatile memory may include, for example, read only memory (ROM), hard disk, erasable programmable read only memory (EPROM), portable compact disk read only memory (CD-ROM), USB memory, flash memory, and the like.

The memory 1120 may store one or more computer-readable codes or instructions, and the processor 610 can execute the computer instructions to perform the above-described information obtaining method including: obtaining object attribute information of display objects, the object attribute information including group attribute information and/or group attention degree information of the display objects; and transmitting the obtained object attribute information of the display objects. For a detailed description of the method, reference may be made to the relevant description of the method in this specification, and details are not repeated here. Various application programs and various data can also be stored in the computer-readable storage medium.

According to another aspect of the present disclosure, there is also provided a computer-readable storage medium storing computer instructions that, when executed by a processor, cause the processor to perform following steps: obtaining object attribute information of a display object, the object attribute information including group attribute information and/or group attention degree information of the display object; and transmitting the obtained object attribute information of the display object.

According to still another aspect of the present disclosure, there is also provided a computer, which may include the information obtaining device as described above. Specifically, the computer may be implemented as one or more dedicated or general-purpose computer system modules or components, such as a personal computer, a laptop, a tablet, a mobile phone, a personal digital assistance (personal digital assistance, PDA), smart glasses, a smart watch, a smart ring, a smart helmet and any smart portable devices.

According to the above-mentioned information obtaining device, computer-readable storage medium, and computer of the present disclosure, different object attribute information can be determined according to the display objects, to achieve specific analysis and accurate classification of the display objects, thereby improving the pertinence of subsequent display content.

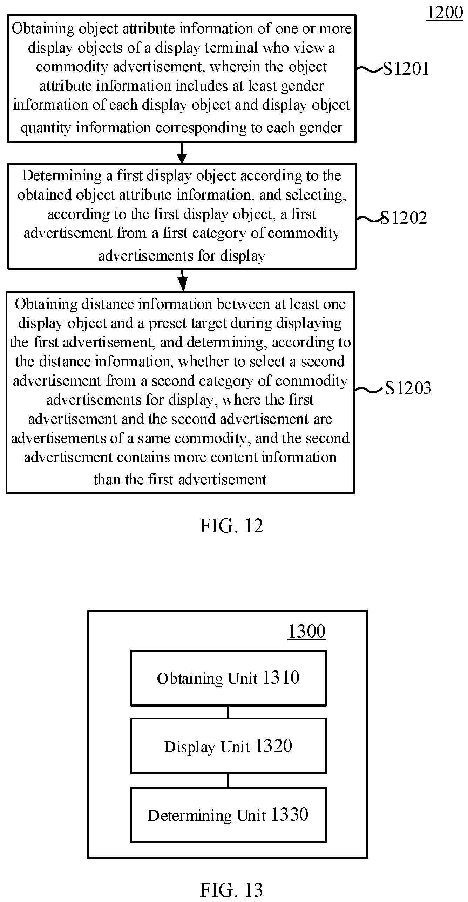

Next, a method for displaying a commodity advertisement 1200 according to at least one embodiment of the present disclosure will be described with reference to FIG. 12. FIG. 12 is a flow chart illustrating a method for displaying a commodity advertisement of the present disclosure.

First, according to step S1201, object attribute information of one or more display objects of a display terminal who view a commodity advertisement is obtained, and the object attribute information includes at least gender information of each display object and display object quantity information corresponding to each gender.

According to at least one embodiment of the present disclosure, the object attribute information of the display objects obtained in this step includes at least the gender information of each display object and the display object quantity information corresponding to each gender. For example, according to at least one embodiment of the present disclosure, the display objects can be classified by using the image information of the display object obtained by, for example, an AI camera, a smart camera, etc., thereby indicating that the display object is male or female. In the process of classifying, various information collection and classification methods, such as facial recognition, image recognition, etc. can be adopted, which is not limited herein.

In this step, optionally, for example, gender information of a total of 10 display objects may be obtained, and detailed information that there are 3 males and 7 females may be obtained.

In step S1202, first display objects according to the obtained object attribute information are determined, and a first advertisement from a first category of commodity advertisements is selected for display, according to the first display objects.

In this step, the first display objects may be determined according to the previously obtained gender information of each display object and the display object quantity information corresponding to each gender. Specifically, the first display objects may be determined according to a comparison result of the gender information of each display object and the display object quantity information corresponding to each gender. For example, in the case where certain gender information corresponds to the largest quantity information, the display objects corresponding to this gender information are determined as the first display objects. For example, in the case where the obtained object attribute information is that there are 3 males and 7 females, it can be determined that the first display objects are females; in the case where the obtained object attribute information is that there are 7 males and 3 females, it can be determined that the first display objects are males. In addition, in the case where the obtained object attribute information is that there are 5 males and 5 females, the male display objects and the female display objects may be randomly selected as the first display objects.

After the first display objects are determined according to the obtained object attribute information, the first advertisement may be selected from the first category of commodity advertisements for display according to the first display objects. For example, in the case where the first display objects are females, the first advertisement for females can be selected from the first category of commodity advertisements for display; in the case where the first display objects are males, the first advertisement for males can be selected from the first category of commodity advertisements for display.

Optionally, when a plurality of first advertisements are displayed, a plurality of different first advertisements may be ranked according to one or more preset features, so that the plurality of first advertisements are sequentially displayed according to the ranking result within a preset time period. For example, when the first advertisements are displayed for males, the plurality of first advertisements may be ranked and sequentially displayed according to one or more features of discount, price, sales volume, and sales volume ranking corresponding to the plurality of first advertisements, respectively.

In step S1203, obtaining distance information between at least one display object and a preset target during displaying the first advertisement, and determining, according to the distance information, whether to select a second advertisement from a second category of commodity advertisements for display, where the first advertisement and the second advertisement are advertisements of the same commodity, and the second advertisement contains more content information than the first advertisement.

In this step, distance information between at least one display object and a preset target can be obtained through a distance sensor. The at least one display object may be at least one first display object, or may be at least one display object other than the first display object, which is not limited herein.

Optionally, determining, according to the distance information, whether to select the second advertisement from the second category of commodity advertisements for display may include: selecting the second advertisement from the second category of commodity advertisements for display in response to the distance information meeting a preset distance threshold requirement; and selecting, from the second category of commodity advertisements, another advertisement different from the second advertisement for display in response to the distance information not meeting the preset distance threshold requirement. For example, the preset threshold requirement may be that the distance information between the at least one display object and the preset target is less than the preset distance threshold, and the second advertisement may be selected from the second category of commodity advertisements for display in response to this requirement being met; another advertisement different from the second advertisement may be selected from the second category of commodity advertisements for display in response to the distance information between the at least one display object and the preset target being greater than or equal to the preset distance threshold.

In addition, optionally, determining, according to the distance information, whether to select the second advertisement from the second category of commodity advertisements for display may further include: selecting the second advertisement from the second category of commodity advertisements for display in response to the distance information meeting a preset distance threshold requirement; and reobtaining object attribute information of one or more display objects of the display terminal who view the commodity advertisement in response to the distance information not meeting the preset distance threshold requirement, and then determining the first display objects according to the reobtained object attribute information to select the first advertisement and/or the second advertisement.

The first advertisement and the second advertisement are advertisements of the same commodity. Optionally, the first advertisement may be, for example, a static poster advertisement of a certain commodity while the second advertisement may be a dynamic MV advertisement of the same commodity, and the second category of commodity advertisements contain more content information than the first category of commodity advertisements. For example, the second advertisement also provides other information about the same commodity in addition to the content information contained in the first advertisement.

For example, in some embodiments, the method for displaying the commodity advertisement 1200 further includes: playing audio content of the second advertisement during displaying the second advertisement.

In another embodiment of the present disclosure, optionally, in the case where the second advertisement is selected from the second category of commodity advertisements for display, the method may further include: determining whether there is a touch operation on a display interface of the display terminal of the commodity advertisement during displaying the second advertisement, and selecting a third advertisement from a third category of commodity advertisements for display in response to the touch operation existing, where the first advertisement, the second advertisement, and the third advertisement are advertisements of the same commodity. The content information of the same commodity included in the third advertisement may be the same as or different from that of the first advertisement and the second advertisement. Specifically, the third advertisement may include at least one of position information of the commodity, evaluation information of the commodity, and a purchase link of the commodity. For example, the location information of the commodity can indicate the area and/or the shelf of the commodity in the supermarket; the evaluation information of the product can indicate the previous commodity evaluation information of the product or the evaluation information of the online store; and the purchase link of the commodity may indicate the purchase website and / or two-dimensional code information of the commodity for the user to perform further operations such as selection and purchase on the commodity according to the third advertisement.

In addition, another advertisement different from the second advertisement may be selected from the second category of commodity advertisements for display in response to the touch operation not existing during displaying the second advertisement.

According to the above method for displaying commodity advertisement of the present disclosure, the corresponding display content can be determined according to different object attribute information of the display object to achieve specific analysis of the display objects and accurate deliver of the display content, thereby improving the pertinence of the display content and enhancing the display effect.

Next, a commodity advertisement display device 1300 according to at least one embodiment of the present disclosure will be described with reference to FIG. 13.

As illustrated in FIG. 13, the commodity advertisement display device 1300 according to at least one embodiment of the present disclosure includes an obtaining unit 1310, a display unit 1320, and a determining unit 1330.

The obtaining unit 1310 obtains object attribute information of one or more display objects of a display terminal who view a commodity advertisement, where the object attribute information includes at least gender information of each display object and display object quantity information corresponding to each gender.

According to at least one embodiment of the present disclosure, the object attribute information of the display object obtained by the obtaining unit 1310 includes at least the gender information of each display object and the display object quantity information corresponding to each gender. The obtaining unit 1310 may be implemented, for example, by an image obtaining device such as an AI camera, a smart camera, or the like. For example, according to at least one embodiment of the present disclosure, the display object can be classified by using the image information of the display object obtained by, for example, an AI camera, a smart camera, etc., thereby indicating that the display objects are males or females. In the process of classifying, various information collection and classification methods, such as facial recognition, image recognition, etc. can be adopted, which is not limited herein.

Alternatively, the obtaining unit 1310 may obtain, for example, gender information of a total of 10 display objects, and detailed obtain information that there are 3 males and 7 females.

The display unit 1320 may determine first display object according to the obtained object attribute information, and select, according to the first display objects, a first advertisement from the first category of commodity advertisements for display.

The display unit 1320 may determine the first display objects according to the previously obtained gender information of each display object and the display object quantity information corresponding to each gender. Specifically, the first display objects may be determined according to a comparison result of the gender information of each display object and display object quantity information corresponding to each gender. For example, in the case where certain gender information corresponds to the largest quantity information, the display objects having this gender information is determined as the first display objects. For example, in the case where the obtained object attribute information is that there are 3 males and 7 females, it can be determined that the first display objects are females; in the case where the obtained object attribute information is that there are 7 males and 3 females, it can be determined that the first display objects are males. In addition, in the case where the obtained object attribute information is that there are 5 males and 5 females, the male display objects and the female display objects may be randomly selected as the first display objects.

After determining the first display objects according to the obtained object attribute information, the display unit 1320 may select a first advertisement from a first category of commodity advertisements for display according to the first display objects. For example, in the case where the first display objects are females, the first advertisement for females can be selected from the first category of commodity advertisements for display; and in the case where the first display objects are males, the first advertisement for males can be selected from the first category of commodity advertisements for display.

Optionally, when a plurality of first advertisements are displayed, the display unit 1320 may rank a plurality of different first advertisements according to one or more preset features, in order to sequentially display the plurality of first advertisements according to the ranking result within a preset time period. For example, when the first advertisement for males are displayed, the plurality of first advertisements may be ranked and sequentially displayed according to one or more features of discount, price, sales volume, and sales volume ranking corresponding to the plurality of first advertisements, respectively.

For example, the display unit 1320 may be implemented as a cathode ray tube (CRT) display, a liquid crystal display, an organic light emitting diode display (OLED), an electronic ink (e-ink) display, or the like, which is not limited by the embodiments of the present disclosure.

The determining unit 1330 obtains distance information between at least one display object and a preset target during displaying the first advertisement, and determines whether to select a second advertisement from the second category of commodity advertisements for display according to the distance information, and the first advertisement and the second advertisement are advertisements of the same commodity, and the second advertisement contains more content information than the first advertisement.

The determining unit 1330 may obtain the distance information between the at least one display object and the preset target through a distance sensor. The at least one display object may be at least one first display object, or may be at least one display object other than the first display objects, which is not limited herein. The determining unit 1330 may be implemented by a general-purpose processor, a digital signal processor (DSP), an application specific integrated circuit (ASIC), a field programmable gate array (FPGA) or other programmable logic devices, a discrete gate or a transistor logic, discrete hardware components, or any combination of the above elements designed to perform the functions described herein.

Optionally, the determining unit 1330 selects the second advertisement from the second category of commodity advertisements for display in response to the distance information meeting a preset distance threshold requirement, and selects, from the second category of commodity advertisements, another advertisement different from the second advertisement for display in response to the distance information not meeting the preset distance threshold requirement. For example, the preset threshold requirement may be that the distance information between the at least one display object and the preset target is less than a preset distance threshold, and the second advertisement may be selected from the second category of commodity advertisements for display in response to this requirement being met; another advertisement different from the second advertisement may be selected from the second category of commodity advertisements for display in response to the distance information between the at least one display object and the preset target being greater than or equal to the preset distance threshold.

In addition, optionally, the determining unit 1330 selects the second advertisement from the second category of commodity advertisements for display in response to the distance information meeting a preset distance threshold requirement; reobtains object attribute information of one or more display objects of the display terminal who view the commodity advertisement in response to the distance information not meeting the preset distance threshold requirement, and then determines the first display object according to the reobtained object attribute information to select the first advertisement and/or the second advertisement.

The first advertisement and the second advertisement are advertisements of the same commodity, optionally, the first advertisement may be, for example, a static poster advertisement of a certain commodity while the second advertisement may be a dynamic MV advertisement of the same commodity, and the second advertisement contains more content information than the first advertisement.

In another embodiment of the present disclosure, optionally, in the case where the second advertisement is selected from the second category of commodity advertisements for display, the determining unit 1330 determines whether there is a touch operation on a display interface of the display terminal of the commodity advertisement during displaying the second advertisement, and selects a third advertisement from a third category of commodity advertisements for display in response to the touch operation existing, and the first advertisement, the second advertisement, and the third advertisement are advertisements of the same commodity. The content information of the same commodity included in the third advertisement may be the same as or different from that of the first advertisement and the second advertisement. Specifically, the third advertisement may include at least one of position information of the commodity, evaluation information of the commodity, and a purchase link of the commodity. For example, the location information of the commodity can indicate the area and/or the shelf of the commodity in the supermarket; the evaluation information of the product can indicate the previous commodity evaluation information of the product or the evaluation information of the online store; and the purchase link of the commodity may indicate the purchase website and / or two-dimensional code information of the commodity for the user to perform further operations such as selection and purchase on the commodity according to the third advertisement.

In addition, the determining unit 1330 may select, from the second category of commodity advertisement, another advertisement different from the second advertisement for display in response to the touch operation not existing during displaying the second advertisement.

According to the above-mentioned commodity advertisement display device of the present disclosure, the corresponding display content can be determined according to different object attribute information of the display object to achieve specific analysis of the display objects and accurate deliver of the display content, thereby improving the pertinence of the display content and enhancing the display effect.

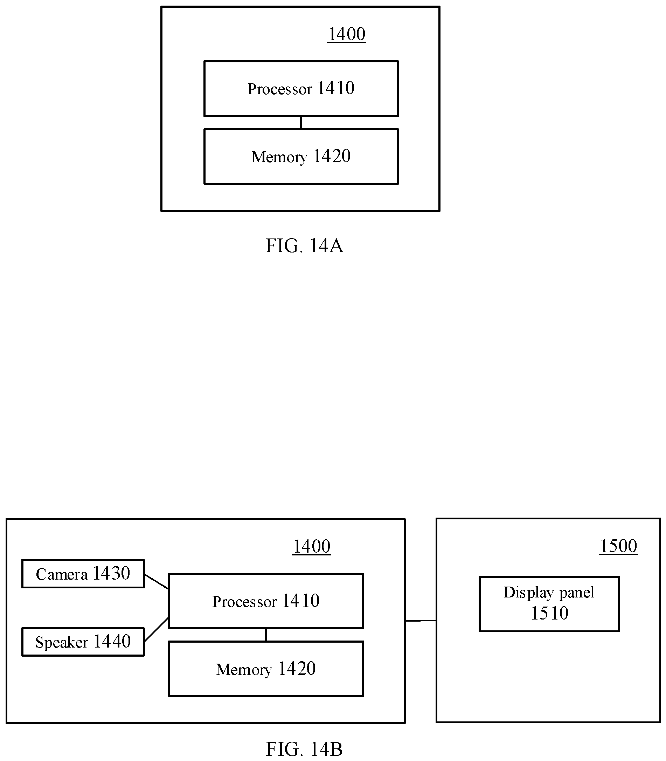

At least one embodiment of the present disclosure also provides a commodity advertisement display device 1400, a structural block diagram of which, as illustrated in FIG. 14A, includes a processor 1410 and a memory 1420. It should be understood that the structure of the commodity advertisement display device 1400 illustrated in FIG. 14A is only exemplary and not limiting, and the commodity advertisement display device 1400 may have other components according to actual requirements.

In at least one embodiment of the present disclosure, the processor 1410 and the memory 1420 may directly or indirectly communicate with each other. The processor 1410, the memory 1420, and other components can communicate through a network connection. The network may include a wireless network, a wired network, and / or any combination of wireless and wired networks. The network may include a wireless network, a wired network, and/or any combination of wireless and wired networks. The network may include a local area network, an Internet, a telecommunication network, an Internet of things (IoT) based on the Internet and/or the telecommunication network, and/or any combination of the above networks, and the like. The wired network can use, for example, twisted pair, coaxial cable, or optical fiber transmission for communication. The wireless network can use, for example, 3G / 4G / 5G mobile communication network, Bluetooth, Zigbee, or WiFi for communication. The embodiments of the present disclosure do not limit the types and functions of the network.

The processor 1410 may control other components of the commodity advertisement display device 1400 to perform required functions. The processor 1410 may be a central processing unit (CPU), a tensor processor (TPU), or a graphics processing unit (GPU) or other devices having data processing capabilities and/or program execution capabilities. The central processing unit (CPU) can adopt an X86 or ARM architecture. The GPU can be integrated directly on the motherboard separately or built into the Northbridge chip of the motherboard. The GPU can also be built into the central processing unit (CPU).

The memory 1420 may include any combination of one or more computer program products, which may include various forms of computer-readable storage medium, such as volatile memory and / or non-volatile memory. Volatile memory can include, for example, random access memory (RAM) and / or cache memory, and the like. Non-volatile memory may include, for example, read only memory (ROM), hard disk, erasable programmable read only memory (EPROM), portable compact disk read only memory (CD-ROM), USB memory, flash memory, and the like.

The memory 1420 may store one or more computer-readable codes or instructions, and the processor 610 may execute the computer instructions to perform the above-mentioned method for displaying the commodity advertisement including: obtaining object attribute information of one or more display objects of a display terminal who view a commodity advertisement, the object attribute information including at least gender information of each display object and display object quantity information corresponding to each gender; determining a first display object according to the obtained object attribute information, and selecting, according to the first display object, a first advertisement from a first category of commodity advertisements for display; obtaining distance information between at least one display object and a preset target during displaying the first advertisement, and determining, according to the distance information, whether to select a second advertisement from a second category of commodity advertisements for display. The first category of commodity advertisements and the second category of commodity advertisements are advertisements of the same commodity, and the second category of commodity advertisements contain more content information than the first category of commodity advertisements. For a detailed description of the method, reference may be made to the relevant description of the method in this specification, and details are not repeated here. Various application programs and various data can also be stored in the computer-readable storage medium.

As illustrated in FIG. 14B, in some embodiments, the commodity advertisement display device 1400 may further include a camera 1430. The camera 1430 is configured to obtain an image of one or more display objects of a display terminal 1500 who view the commodity advertisement, and transmit the image to the processor 1410.

In some embodiments, the commodity advertisement display device 1400 may further include a speaker 1440. The speaker 1440 is configured to play audio content of the second advertisement.

In some embodiments, the display terminal 1500 is in signal communication with the commodity advertisement display device 1400, and the display terminal 1500 may include a display panel 1510. The display panel 1510 is configured to display, for example, the first advertisement and the second advertisement.

In some embodiments, the display panel 1510 may be further configured to detect a touch operation performed on the display panel 1510 and provide a detection result to the processor 1410.

The display panel 1510 may be, for example, a liquid crystal display panel, an organic light-emitting diode display panel, an electronic ink display panel, etc., which is not limited by the embodiments of the present disclosure. In addition, the display panel 1510 may include a touch sensor for detecting the touch operation performed on the display panel 1510, where the touch sensor may be a resistive touch sensor, a capacitive touch sensor, an infrared touch sensor, an ultrasonic touch sensor, etc., and the touch sensor may be an external touch sensor or a built-in touch sensor, for example, the touch sensor may be formed as an in-cell type or an on-cell type. For example, if the touch sensor is a capacitive touch sensor, the touch sensor may be a self-capacitive touch sensor or a mutual-capacitive touch sensor.

According to yet another aspect of the present disclosure, there is also provided a computer-readable storage medium storing computer instructions that, when executed by a processor, cause the processor to perform following steps: obtaining object attribute information of one or more display objects of a display terminal who view a commodity advertisement, the object attribute information including at least gender information of each display object and display object quantity information corresponding to each gender; determining a first display object according to the obtained object attribute information, and selecting, according to the first display object, a first advertisement from a first category of commodity advertisements for display; obtaining distance information between at least one display object and a preset target, and determining, according to the distance information, whether to select a second advertisement from a second category of commodity advertisements for display. The first category of commodity advertisements and the second category of commodity advertisements are advertisements of the same commodity, and the second category of commodity advertisements contain more content information than the first category of commodity advertisements.

A computer-readable medium may take many forms, including tangible storage medium, carrier wave medium, or physical transmission medium, etc. The stable storage medium may include an optical disk or a magnetic disk, and a storage system used in other computers or similar devices that can implement the system components described in the figures. The unstable storage medium may include a dynamic memory, such as the main memory of the computer platform, etc. The tangible transmission medium may include a coaxial cable, a copper cable, and an optical fiber, such as the lines that form a bus within a computer system. The carrier wave transmission medium can transmit electrical signals, electromagnetic signals, acoustic signals, or optical signals. These signals can be generated by means of radio frequency or infrared data communication. Conventional computer-readable medium include a hard disk, a floppy disk, a magnetic tape, and any other magnetic medium; CD-ROM, DVD, DVD-ROM, any other optical medium; a punched card, any other physical storage medium containing small hole patterns; RAM, PROM, EPROM, FLASH-EPROM, any other memory chip or tape; a carrier and cable for transmitting data or instructions or connecting device for transmitting carrier, any other program code and/or data that can be read by a computer. Among these forms of the computer-readable medium, there are many forms that appear in the process of the processor executing instructions and delivering one or more results.

According to still another aspect of the present disclosure, there is also provided a computer, which may include the display device as described above. Specifically, the computer may be implemented as one or more dedicated or general-purpose computer system modules or components, such as a personal computer, a laptop, a tablet, a mobile phone, a personal digital assistance (personal digital assistance, PDA), smart glasses, a smart watch, a smart ring, a smart helmet and any smart portable devices.

According to the above-mentioned commodity advertisement display device, computer-readable storage medium and computer of the present disclosure, the corresponding display content can be determined according to different object attribute information of the display objects to achieve specific analysis of the display objects and accurate deliver of the display content, thereby improving the pertinence of the display content and enhancing the display effect.

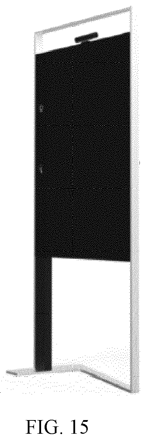

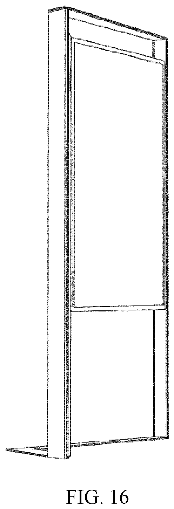

FIG.15 illustrates a perspective diagram of a display device according to at least one embodiment of the present disclosure. FIG. 16 illustrates a perspective line diagram of a display device according to at least one embodiment of the present disclosure.

Unless otherwise defined, all terms (including technical and scientific terms) used herein have the same meaning as commonly understood by those of ordinary skill in the art to which this disclosure belongs. It should also be understood that terms such as those defined in general dictionaries should be interpreted to have meanings consistent with their meanings in the context of related technologies, and should not be interpreted to have idealized or extremely formalized meanings unless explicitly defined as such herein.

What are described above is related to the illustrative embodiments of the disclosure only and not limitative to the scope of the disclosure; the scopes of the disclosure are defined by the accompanying claims.

## Claims

1. A method for displaying a commodity advertisement, comprising:
obtaining object attribute information of one or more display objects of a display terminal who view a commodity advertisement, the object attribute information comprising at least gender information of each display object and display object quantity information corresponding to each gender;
determining a first display object according to the obtained object attribute information, and selecting, according to the first display object, a first advertisement from a first category of commodity advertisements for display; and
obtaining distance information between at least one display object and a preset target during displaying the first advertisement, and determining, according to the distance information, whether to select a second advertisement from a second category of commodity advertisements for display, wherein the first advertisement and the second advertisement are advertisements of a same commodity.

2. The method according to claim 1, wherein the second advertisement provides other information about the same commodity in addition to content information contained in the first advertisement.

3. The method according to claim 1 or 2, wherein the determining, according to the distance information, whether to select the second advertisement from the second category of commodity advertisements for display comprises:
selecting the second advertisement from the second category of commodity advertisements for display, in response to the distance information meeting a preset distance threshold requirement; and
selecting, from the second category of commodity advertisements, another advertisement different from the second advertisement for display, in response to the distance information not meeting the preset distance threshold requirement.

4. The method according to claim 1 or 2, wherein the determining, according to the distance information, whether to select the second advertisement from the second category of commodity advertisements for display comprises:
selecting the second advertisement from the second category of commodity advertisements for display, in response to the distance information meeting a preset distance threshold requirement; and
reobtaining object attribute information of one or more display objects of the display terminal who view the commodity advertisement, in response to the distance information not meeting the preset distance threshold requirement.

5. The method according to claim 1 or 2, wherein in a case where it is determined to select the second advertisement from the second category of commodity advertisements for display, the method further comprises:
determining whether there is a touch operation on a display interface of the display terminal of the commodity advertisement during displaying the second advertisement, and
selecting a third advertisement from a third category of commodity advertisements for display, in response to the touch operation existing,
wherein the first advertisement, the second advertisement, and the third advertisement are advertisements of the same commodity.

6. The method according to claim 5, wherein the third advertisement comprises at least one selected from a group consisting of position information of the commodity, evaluation information of the commodity, and a purchase link of the commodity.

7. The method according to claim 5, further comprising:
selecting, from the second category of commodity advertisements, another advertisement different from the second advertisement for display, in response to the touch operation not existing.

8. The method according to any one of claims 1 to 7, wherein
the gender information comprises male and female, and
the determining the first display object according to the obtained object attribute information comprises:
determining males as the first display object, in a case where a number of the display objects whose gender information is male is greater than a number of display objects whose gender information is female;
determining females as the first display object, in a case where a number of display objects whose gender information is male is less than a number of display objects whose gender information is female; and
determining males or females as the first display object, in a case where a number of display objects whose gender information is male is equal to a number of display objects whose gender information is female.

9. The method according to any one of claims 1 to 7, wherein
the selecting, according to the first display object, the first advertisement from the first category of commodity advertisements for display comprises:
ranking a plurality of different first advertisements, and sequentially displaying the plurality of different first advertisements.

10. The method according to claim 3, wherein
the preset distance threshold requirement is that a distance between the at least one display object and the preset target is less than a preset distance threshold.

11. The method according to any one of claims 1 to 10, wherein
the first advertisement is a static advertisement; and
the second advertisement is a dynamic advertisement.

12. The method according to any one of claims 1 to 11, further comprising:
playing audio content of the second advertisement during displaying the second advertisement.

13. A commodity advertisement display device, comprising:
an obtaining unit configured to obtain object attribute information of one or more display objects of a display terminal who view a commodity advertisement, the object attribute information comprising at least gender information of each display object and display object quantity information corresponding to each gender;
a display unit configured to determine a first display object according to the obtained object attribute information, and select, according to the first display object, a first advertisement from a first category of commodity advertisements for display; and
a determining unit configured to obtain distance information between at least one display object and a preset target during displaying the first advertisement, and determine, according to the distance information, whether to select a second advertisement from a second category of commodity advertisements for display, wherein the first advertisement and the second advertisement are advertisements of a same commodity, and the second advertisement contains more content information than the first advertisement.

14. A commodity advertisement display device, comprising:
one or more processors; and
one or more memories,
wherein the one or more memories store computer readable codes which, when executed by the one or more processors, perform following steps:
obtaining object attribute information of one or more display objects of a display terminal who view a commodity advertisement, the object attribute information comprising at least gender information of each display object and display object quantity information corresponding to each gender;
determining a first display object according to the obtained object attribute information, and selecting, according to the first display object, a first advertisement from a first category of commodity advertisements for display; and
obtaining distance information between at least one display object and a preset target during displaying the first advertisement, and determining, according to the distance information, whether to select a second advertisement from a second category of commodity advertisements for display, wherein the first advertisement and the second advertisement are advertisements of a same commodity.

15. The commodity advertisement display device according to claim 14, further comprising a camera,
wherein the camera is configured to obtain an image of the one or more display objects of the display terminal who view the commodity advertisement, and transmit the image to the processor.

16. The commodity advertisement display device according to claim 14 or 15, wherein the display terminal comprises a display panel,
wherein the display panel is configured to display the first advertisement and the second advertisement.

17. The commodity advertisement display device according to claim 16, wherein the display panel is further configured to detect a touch operation performed on the display panel and provide a detection result to the one or more processors.

18. The commodity advertisement display device according to any one of claims 14 to 17, further comprising a speaker,
wherein the speaker is configured to play audio content of the second advertisement.

19. A computer-readable storage medium storing computer instructions, wherein the computer instructions, when executed by a processor, cause the processor to perform following steps:
obtaining object attribute information of one or more display objects of a display terminal who view a commodity advertisement, the object attribute information comprises at least gender information of each display object and display object quantity information corresponding to each gender;
determining a first display object according to the obtained object attribute information, and selecting, according to the first display object, a first advertisement from a first category of commodity advertisements for display; and
obtaining distance information between at least one display object and a preset target during displaying the first advertisement, and determining, according to the distance information, whether to select a second advertisement from a second category of commodity advertisements for display, wherein the first advertisement and the second advertisement are advertisements of a same commodity.

20. The computer-readable storage medium according to claim 19, wherein the second advertisement provides other information about the same commodity in addition to content information contained in the first advertisement.
